# EUROPÄISCHE PATENTSCHRIFT

(11) **EP 0 818 864 B1**
(45) Veröffentlichungstag und Bekanntmachung des Hinweises auf die Patenterteilung: **17.10.2001**
(21) Anmeldenummer: 97201999.6
(22) Anmeldetag: 01.07.1997
(51) Int. Cl.: H02G 3/12, F16B 9/02

(54) **Zur Montage in einem Loch in einer Wand bestimmtes Element**
Part to be mounted in a hole of a wall
Elément destiné à être monté dans un trou de mur

(30) Priorität: 10.07.1996 BE 9600628
(43) Veröffentlichungstag der Anmeldung: 14.01.1998
(73) Patentinhaber: B.V. Kunststoffenindustrie Attema, NL-4203 NN Gorinchem (NL)
(72) Erfinder: de Hoog, Antonie, 4213 DE Dalem (NL)
(74) Vertreter: Mertens, Hans Victor

(56) Entgegenhaltungen:
- EP-A- 0 293 614
- DE-B- 1 231 331
- FR-A- 2 611 240

## Beschreibung

Die Erfindung betrifft ein in einem Loch in einer Wand anzubringendes Element, das mindestens eine Seitenwand aufweist und an einer Randseite der Seitenwand von mindestens einem seitlich nach außen vorstehenden Kragenteil, das zur Auflage auf einer Wandseite neben dem Loch bestimmt ist, begrenzt wird, wobei die Seitenwand des Elements mit seitlich nach außen vorstehenden Nocken versehen ist, die federnd mit dem Element verbunden sind und in eine Position bewegt werden können, in der die Nocken nicht aus der Fläche der Seitenwand hervorragen. Nachstehend soll unter dem Begriff "Element" eine elektrische Anschlußdose, ein Schraubstutzen, ein Durchführungskragen oder dergleichen verstanden werden.

Ein Element in Form einer elektrischen Anschlußdose ist aus der deutschen Auslegeschrift DE-B-1231331 bekannt. Die Nocken dieses Elements werden durch streifenförmige abgewinkelte rechteckige Nocken verschiedener Länge gebildet, die in rechteckigen Öffnungen der Seitenwand des Elements angeordnet und an einem Rand starr mit dem Boden des Elements befestigt sind. Das in Richtung des Kragenteils weisende freie Ende jeder Nocke steht in spitzem Winkel von der Seitenwand des Elements nach außen vor. Wenn das Element durch ein in der Wand angebrachtes Loch gedrückt wird, biegen sich zumindest einige der Nocken in den rechteckigen Öffnungen des Elements so weit nach innen, daß sie das Loch passieren können. Nachdem das vom Boden des Elements abgekehrte und in der Nähe des Kragens des Elements liegende Ende eines Nockensatzes die Hinterseite der Wand passiert hat, federn diese Nocken seitlich nach außen, so daß das Element nicht mehr aus der Wand gezogen werden kann. Da das Element mit dem Kragen oder Teilen des Kragens an der Vorderseite der Wand anliegt, ist das Element dadurch bereits wenigstens provisorisch befestigt.

Beim Anbringen des Elements in der Wand muß das Element weiter in das Loch in der Wand gedrückt werden, als strenggenommen notwendig ist damit die Nocken an der Hinterseite der Wand anliegen, denn zur Gewährleistung der seitlichen Auswärtsfederung der Nocken muß auch eine Toleranz der Dicke der Wand, die normalerweise aus einer Gipsplatte besteht, berücksichtigt werden. Darüber hinaus muß auch die Anwesenheit von beim Anbringen des Loches entstandenen Materialausfransungen an der Hinterseite der Wand berücksichtigt werden. Dadurch ist beim Element des Standes der Technik der Abstand zwischen dem Kragen oder den Kragenteilen und den freien Enden der Nocken im ausgefederten Zustand größer als die Wanddicke, so daß das Element durch die Nocken unvorteilhaft und unvollständig in der Wand fixiert wird und somit keine permanente Befestigung bilden kann. Diese kann erst dann enstehen, wenn Installationsmaterial, das in die Vorderseite der Wand eingreift und die Nocken des Elements fest gegen die Hinterseite der Wand drückt, an, auf oder in dem Element angebracht wird. Ein weiterer Nachteil ist der, daß der Abstand zwischen dem Kragen und dem in Richtung des Kragens weisenden freien Ende der Nocken festgelegt ist, so daß das Element nicht in Wänden, deren Dicke von der Standarddicke abweicht, montiert werden kann.

Die europäische Patentanmeldung EP-A-0293614 beschreibt eine Ausführungsform eines Elements in Form einer elektrischen Anschlußdose mit seitlich vorstehenden hintereinander angeordneten Nocken und einem losen Kragen, der über Schraubenfedern und Führungen mit der Seitenwand des Elements verbunden ist. Durch die federnde Anordnung des Kragens kann das Element soweit in ein Loch in einer Wand gedrückt werden, daß die Nocken sicher hinter der Wand reibungslos auswärts federn können, wobei der Kragen die Nocken dann an die Hinterseite der Wand drückt. Der federnde Kragen macht überdies - innerhalb bestimmter Grenzen - die Montage des Elements in Wänden verschiedener oder abweichender Dicke möglich. Nachteilig ist dabei allerdings, daß die zur Bereitstellung eines federnden Kragens gewählte Konstruktion eine separate Form für den Kragen und aufwendige Montagehandlungen mit zusätzlich anzubringenden Bauteilen erfordert.

Außerdem bieten die bekannten Nocken nur unvollständigen Widerstand gegen die Kräfte, die in einer der Richtung der Wandbefestigung des Elements entgegengesetzten Richtung einwirken: beim Auftreten dieser Kräfte können sich die Nocken leicht weiter zur Seite biegen und sogar abbrechen.

Aufgabe der Erfindung ist die Bereitstellung eines Elements, beispielsweise einer elektrischen Anschlußdose, eines Schraubstutzens oder eines Durchführungskragens, mit Nocken, die von der Wand gerichtete große Kräfte aufnehmen können, ohne daß dabei die Gefahr besteht, daß sie sich zur Seite biegen oder abbrechen.

Eine weitere Aufgabe der Erfindung ist die Bereitstellung eines solchen Elements mit einem federnden Kragen, der einfach und preiswert ausgeführt ist.

Zum Erreichen der obengenannten Aufgaben ist das erfindungsgemäße Element der in der Einleitung genannten Art dadurch gekennzeichnet, daß die Nocken schwenkbar um eine Scharnierachse, die im spitzen oder rechten Winkel zur Randseite des Elements steht, mit der Seitenwand des Elements verbunden sind, wobei eine freie Seite jeder Nocke an das gegen die Randseite des Elements gerichtete Ende der Scharnierachse angrenzt und im wesentlichen parallel zur Randseite des Elements verläuft. Aufgrund der gewählten Richtung der Scharnierachse wird die Seitenwand des Elements durch die beim normalen Gebrauch auf die Nocken einwirkenden Kräfte nicht verformt. Außerdem kann die Nocke nicht umbiegen, weil die Biegelänge praktisch null ist.

Der Winkel zwischen der Scharnierachse und dem Seitenrand des Elements beträgt vorzugsweise ca. 20° bis 90°. Der Winkel beträgt insbesondere ca. 45°.

In bevorzugten Ausführungsformen sind die Nocken im wesentlichen dreieckig oder viereckig geformt, wobei eine Seite jeder Nocke im wesentlichen mit der Scharnierachse zusammenfällt und mit der Seitenwand des Elements verbunden ist, eine zweite Seite im wesentlichen parallel zur Randseite des Elements verläuft und nicht mit der Seitenwand verbunden ist, und die restliche(n) Seite(n) ebenfalls nicht mit der Seitenwand verbunden ist (sind). Die Nocken können natürlich auch mehr als vier Ecken aufweisen.

Zur Versteifung der Nocke und eventuell auch zur Vergrößerung der Auflagefläche der Nocke gegen die Hinterseite der Wand ist vorzugsweise mindestens eine freie Seite jeder Nocke mit einer Rippe versehen, die sich im wesentlichen entlang der freien Seite und quer zur Seitenwand des Elements erstreckt. Für die freien Seiten der Nocke, die an ein Ende der Scharnierachse angrenzen und an der Außenseite des Elements angeordnet sind, ist die Rippe vorzugsweise dreieckig geformt. Dabei ist anzumerken, daß sich die Rippe bzw. Rippen sowohl an der zur Außenseite des Elements weisenden Nockenseite als auch an der zur Innenseite des Elements weisenden Nockenseite erstrecken können.

In einer weiteren bevorzugten Ausführungsform des erfindungsgemäßen Elements weisen die Nocken im wesentlichen eine kegelsegmentförmige Gestalt auf, wobei die Spitze des Kegels vom Kragenteil des Elements abgewandt ist.

Damit die Nocken des erfindungsgemäßen Elements sicher hinter die Wand greifen können, weist das erfindungsgemäße Element einen federnden Kragen auf, der dadurch entsteht, daß die Seitenwand des Elements in der Nähe des Kragenteils eine derartige Schwachstelle besitzt, daß das Kragenteil in der Fläche der Seitenwand federnd in eine Richtung senkrecht zur Richtung der Randseite des Elements bewegt werden kann.

In einer bevorzugten Ausführungsform besteht die Schwachstelle aus einer oder mehreren im Anspritzverfahren angebrachten flexiblen und elastischen Seitenwandteilen. Die Seitenwand des Elements, das üblicherweise aus einem flexiblen und elastischen Kunststoff besteht, kann dadurch in der Nähe des Kragenteils vorübergehend oder permanent gedehnt werden.

Die Schwachstelle der Seitenwand des Elements besteht insbesondere aus einem Muster von vieleckigen, insbesondere rautenförmigen, oder schlitzförmigen Öffnungen. Die schlitzförmigen Öffnungen erstrecken sich vorzugsweise im wesentlichen parallel zur Randseite des Elements und bestehen aus mindestens einem verzweigten gabelförmigen Schlitz, wobei die Zinken um ein Ende eines Schlitzes greifen. Die schlitzförmigen Öffnungen können auch im wesentlichen halbkreisförmig oder hantelförmig sein.

In einer bevorzugten Ausführungsform ist ein Anschlag zum Begrenzen des Abstands, über den das Kragenteil bewegt werden kann, vorgesehen.

Wie bereits erwähnt, kann das erfindungsgemäße Element als elektrische Anschlußdose, Durchführungskragen oder Schraubstutzen zum Befestigen in der Wand einer elektrischen Anschlußdose ausgeführt sein. In letzterem Fall kann sich von der Randseite des Elements aus ein Schraubstutzenkörper in der von der Seitenwand abgekehrten Richtung erstrecken.

Die Erfindung wird nachfolgend anhand der beigefügten Zeichnung näher erläutert. In der Zeichnung zeigen:
Fig. 1 eine Seitenansicht der erfindungsgemäßen Anschlußdose;
Fig. 2 eine Draufsicht gemäß Pfeil II der Anschlußdose gemäß Fig. 1;
Fig. 3 einen Querschnitt entlang der Linie III-III der Anschlußdose gemäß Fig. 2;
Fig. 3a einen teilweisen Querschnitt durch eine andere erfindungsgemäße Anschlußdose;
Fig. 3b eine Ansicht der Anschlußdose gemäß Pfeil IIIb in Fig. 3a;
Fig. 3c eine alternative Ausführungsform des Details IIIc der Anschlußdose gemäß Fig. 3b;
Fig. 4 eine perspektivische schematische Ansicht einer Nocke der Anschlußdose gemäß Fig. 1-3, 3a und 3b in vergrößertem Maßstab;
Fig. 5 und 6 alternative Ausführungsformen der Nocke gemäß Fig. 4;
Fig. 7-9 perspektivische schematische Ansichten verschiedener Ausführungsformen viereckiger Nocken;
Fig. 10 und 11 perspektivische schematische Ansichten von Ausführungsformen kegelsegmentförmiger Nocken;
Fig. 12 eine perspektivische Ansicht einer Ausführungsform einer Schwachstelle einer Seitenwand der Dose;
Fig. 13-21 Seitenansichten verschiedener anderer Ausführungsformen von Schwachstellen der Seitenwand der Dose;
Fig. 22 und 23 eine Seitenansicht bzw. eine perspektivische Ansicht einer weiteren Ausführungsform einer Schwachstelle;
Fig. 24-26 Seitenansichten weiterer Ausführungsformen von Schwachstellen;
Fig. 27 einen erfindungsgemäßen Durchführungskragen; und
Fig. 28 einen erfindungsgemäßen Schraubstutzen.

In den verschiedenen Abbildungen beziehen sich identische Bezugsziffern auf die gleichen Bauteile oder auf Bauteile mit der gleichen Funktion.

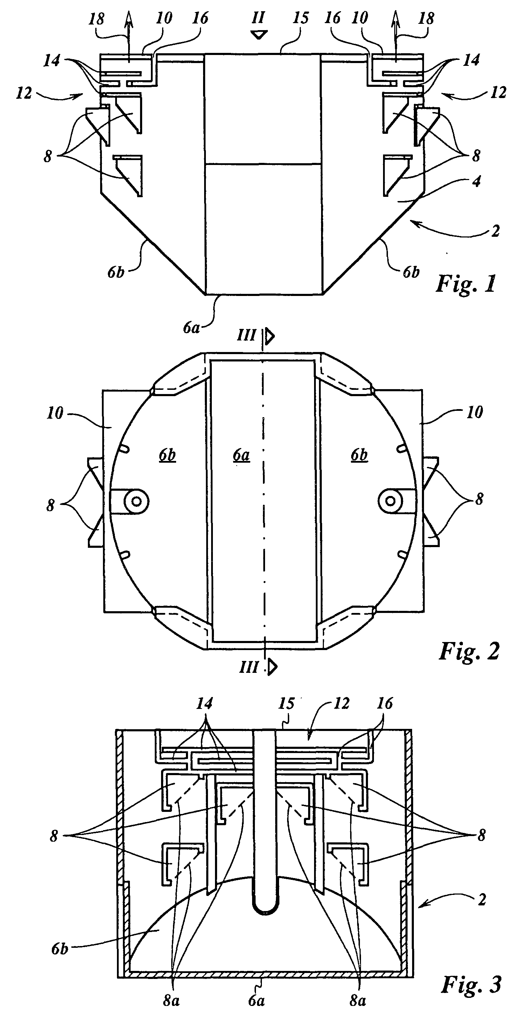

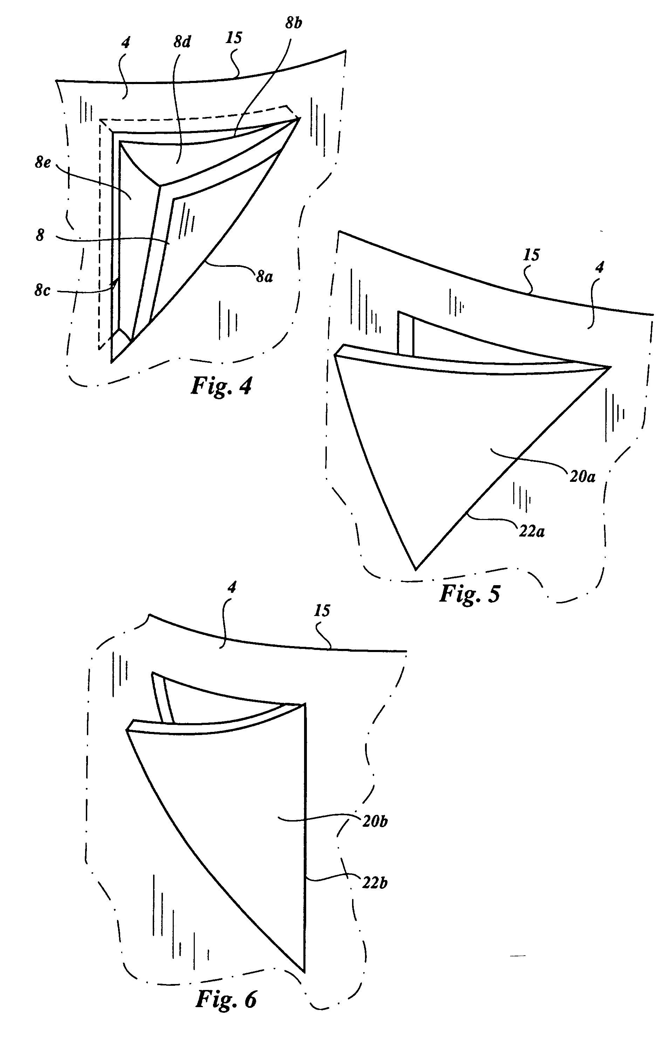

Fig. 1, 2 und 3 zeigen eine Anschlußdose 2, die in einer hohlen Wand angebracht werden soll. Die Anschlußdose 2 weist eine im wesentlichen ringförmige Seitenwand 4, die an zwei gegenüberliegenden Seiten abgeflacht ist, und einen Boden, der ein rechteckiges Teil 6a und zwei ellipsensegmentförmige, zu dem rechteckigen Teil 6a in einem Winkel von 45° stehende Teile 6b, auf. Die Seitenwand 4 besitzt zwölf Nocken 8, die in der normalen Position, wie in den Figuren gezeigt, seitlich nach außen vorstehen und federnd in eine Position bewegt werden können, in der sie nicht aus der Fläche der Seitenwand 4 hervorragen. Der Aufbau und die Funktion der Nocken wird nachfolgend anhand von Fig. 4 näher erläutert. Die Anschlußdose besteht aus PP (Polypropen) und weist einen IP-Wert von 30 auf.

Die Dose 2 besitzt an ihrer offenen Randseite 15 vier Kragenteile 10, unter denen eine Schwachstelle 12 in der Seitenwand 4 der Dose 2 angebracht ist. Die Schwachstelle 12 besteht im wesentlichen aus einem Satz parallel zur offenen Randseite 15 der Dose 2 verlaufender Schlitze 14 und senkrecht dazu verlaufender Schlitze 16. Die durch die Schlitze 14 und 16 gebildete Schwachstelle 12 in der Seitenwand 4 gestattet die federnde Bewegung der Kragenteile 10 gegenüber dem restlichen Teil der Seitenwand 4 in der durch Pfeil 18 angedeuteten Richtung.

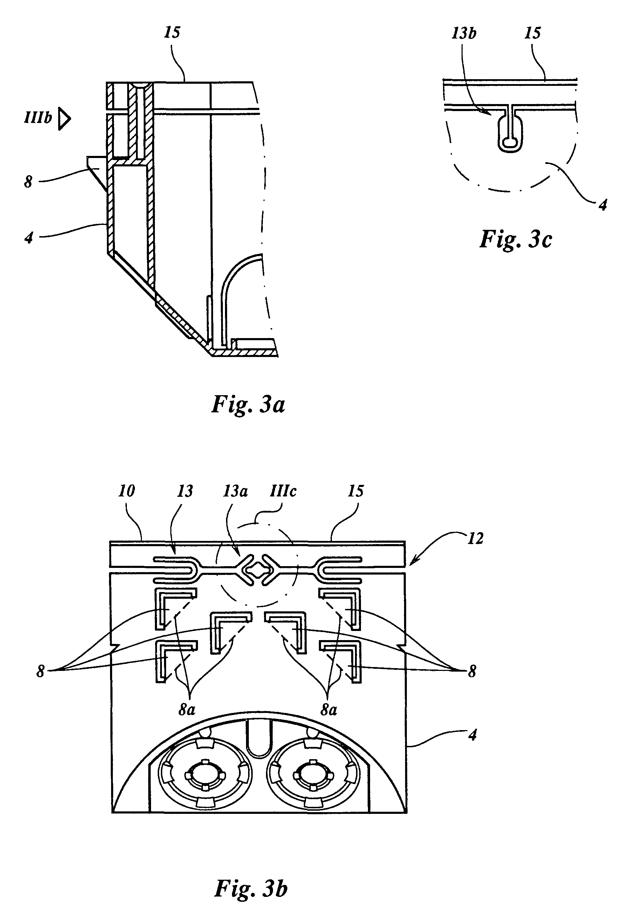

Fig. 3a und 3b zeigen eine elektrische Anschlußdose, die im wesentlichen wie oben, in bezug auf die Anschlußdose gemäß Fig. 1-3 beschrieben, aufgebaut ist. Die Formgebung der Schwachstelle 12 weicht bei der Dose gemäß Fig. 3a und 3b ab. Die Schwachstelle 12 besteht an der mit 13 angedeuteten Stelle aus einem gabelförmig verzweigten Schlitz, der um ein Ende eines anderen Schlitzes greift. Dadurch wird an der Stelle 13 ein federndes Element ausgebildet, wodurch die Kragenteile an der offenen Randseite 15 der Dose gegenüber dem mit Nocken 8 versehenen Teil der Seitenwand 4 der Dose bewegt werden können. Im Bereich der bei 13a angedeuteten Schwachstelle 12 ist ein Anschlag in Form von zwei abgewinkelten Armen angebracht, die sich bei der federnden Bewegung der Kragenteile dehnen werden, wobei die Länge der Arme den maximalen Federweg bestimmt. Dadurch wird eine Überbelastung der Federelemente an der mit 13 angedeuteten Stelle vermieden und die federnde Wirkung wird unter allen Umständen beibehalten.

Fig. 3c zeigt eine alternative Ausführungsform eines Anschlags, wobei an der mit 13b angedeuteten Stelle ein an seinem Ende mit einer Verdickung versehener Arm, der sich in eine Aussparung der Seitenwand 4 bewegen kann, mit den federnd angeordneten Kragenteilen verbunden ist. Die Verdickung kann die Aussparung nicht mehr verlassen und begrenzt dadurch die Bewegung der Kragenteile.

Fig. 4 zeigt die Nocke 8 der Anschlußdose gemäß Fig. 1-3, 3a und 3b, wobei die offene Randseite 15 der Dose 2 als Bezugslinie angedeutet ist. Die Nocke 8 ist im wesentlichen dreieckig und an einer ersten Seite 8a federnd an die Seitenwand 4 des Elements 2 angelenkt. Eine zweite Seite 8b der Nocke 8 verläuft im wesentlichen parallel zur offenen Randseite 15 des Elements 2. Die zweite Seite 8b und eine dritte Seite 8c sind beide nicht mit der Seitenwand 4 verbunden, und beide besitzen eine dreieckige Rippe 8d bzw. 8e, die sich im wesentlichen entlang der freien Seite und quer zur Seitenwand 4 des Elements 2 erstreckt.

Wenn die Dose 2 gemäß Fig. 1-4 durch ein kreisförmiges Loch, dessen Durchmesser im wesentlich gleich dem Außendurchmesser der Seitenwand 4 ist, in einer Wand bewegt wird, federn die Nocken 8 beim Durchgang durch das Loch nach innen in eine Position, in der sie nicht mehr aus der Fläche der Seitenwand 4 hervorstehen. Nachdem die Nocken 8 die Wand passiert haben, federn sie nach außen aus der Seitenwand, wodurch eine Bewegung des Elements 2 in der entgegengesetzten Richtung nicht mehr möglich ist. Die in Fig. 1-3, 3a und 3b gezeigte Anschlußdose besitzt drei Sätze mit je vier Nocken 8, wobei die zweite Seite 8d der Nockensätze jeweils in einem anderen Abstand von der Unterseite des dazugehörigen Kragenteils 10 angebracht ist, so daß das Element 2 in Wandteilen unterschiedlicher Dicke befestigt werden kann.

Zur zweckmäßigen Befestigung des Elements 2 können die Kragenteile 10 gegenüber den zweiten Seiten 8b der Nocken 8 federnd in Richtung des Pfeils 18 bewegt werden, wodurch mindestens ein Nockensatz 8 das Wandteil problemlos passieren und danach seitlich nach außen federn kann, wonach sich das Element durch Zurückfedern der Kragenteile 10 gegenüber der Seitenwand 4 selbst zwischen der zweiten Seite 8b eines aus vier Nocken bestehenden Satzes und den Kragenteilen 10 festklemmt. Die Nocken 8 lassen sich in einer verhältnismäßig einfachen Form leicht formen.

Fig. 5 und 6 zeigen dreieckige Nocken 20a und 20b eines erfindungsgemäßen Elements in ihrer einfachsten Form. In Fig. 5 beträgt der Winkel zwischen dem Scharnierachse 22a der Nocke 20a und der durch eine Linie angedeuteten Randseite 15 des Elements ungefähr 45° . In Fig. 6 beträgt der Winkel zwischen der Scharnierlinie 22b der Nocke 20b und der Randseite 15 90°.

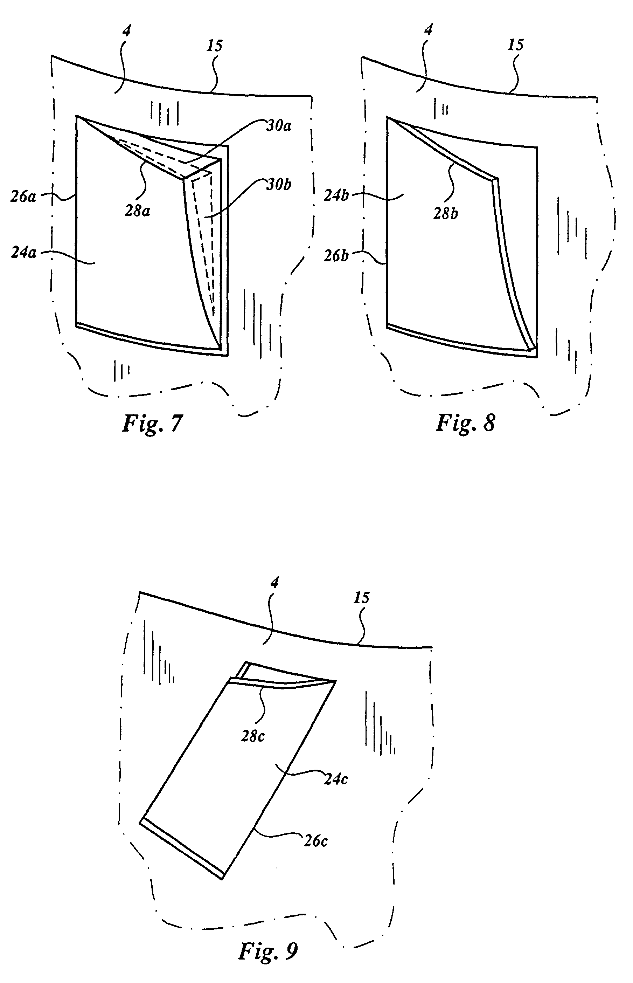

Fig. 7 zeigt eine viereckige Nocke 24a, bei der nur eine Seite im Bereich der Scharnierachse 26a mit der Seitenwand 4 eines Elements verbunden ist. Die Seite 28a der Nocke 24a verläuft im wesentlichen parallel zur Randseite 15 des Elements. Die Scharnierachse 26a steht im wesentlichen senkrecht zur Randseite 15. Die Nocke 24a ist an zwei freien Seiten mit dreieckigen Rippen 30a, 30b versehen, die im wesentlichen senkrecht zur Fläche der Seitenwand 4 des Elements nach innen verlaufen.

Fig. 8 und 9 zeigen viereckige Nocken 24b bzw. 24c, die nur entlang einer Scharnierachse 26b bzw. 26c mit der Seitenwand 4 eines Elements verbunden sind. Die freien Seiten 28b und 28c der Nocken 24b bzw. 24c verlaufen im wesentlichen parallel zur Randseite 15 des Elements. In Fig. 8 beträgt der Winkel zwischen der Scharnierachse 26b und der Randseite 15 90°. In Fig. 9 beträgt der Winkel zwischen der Scharnierachse 26c und der Randseite 15 ca. 60°.

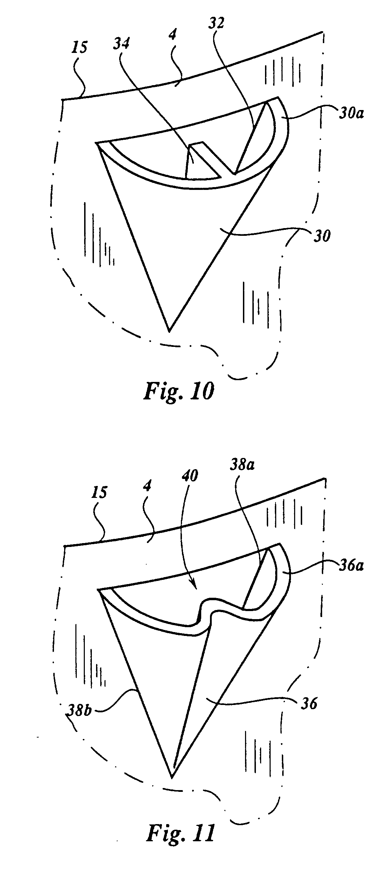

Fig. 10 zeigt eine kreissegmentförmige Nocke 30, die entlang einer Scharnierachse 32 mit der Seitenwand 4 eines Elements verbunden ist. Die Nocke 30 besitzt an der nach innen gerichteten Seite eine beispielsweise dreieckige Rippe 34. Die im wesentlichen E-förmige Seite 30a der Nocke 30 verläuft parallel zur Randseite 15 des Elements und stützt sich im Gebrauch gegen die Hinterseite einer Wand ab. Der Öffnungswinkel des Kegels beträgt ca. 60°.

Die im wesentlichen kegelsegmentförmige Nocke 36 gemäß Fig. 11 ist im Bereich von zwei Scharnierachsen 38a und 38b mit der Seitenwand 4 eines Elements verbunden. Die Nocke 36 weist eine Falte 40 auf, wodurch die Nocke so nach innen federn kann, daß sie nicht aus der Seitenwand 4 hervorragt, und danach automatisch wieder in die in Fig. 11 gezeigte Position zurückfedern kann. Die W-förmige Seite 36a der Nocke 36 verläuft im wesentlichen parallel zur Randseite 15 des Elements. Der Öffnungswinkel des Kegels beträgt ca. 50°.

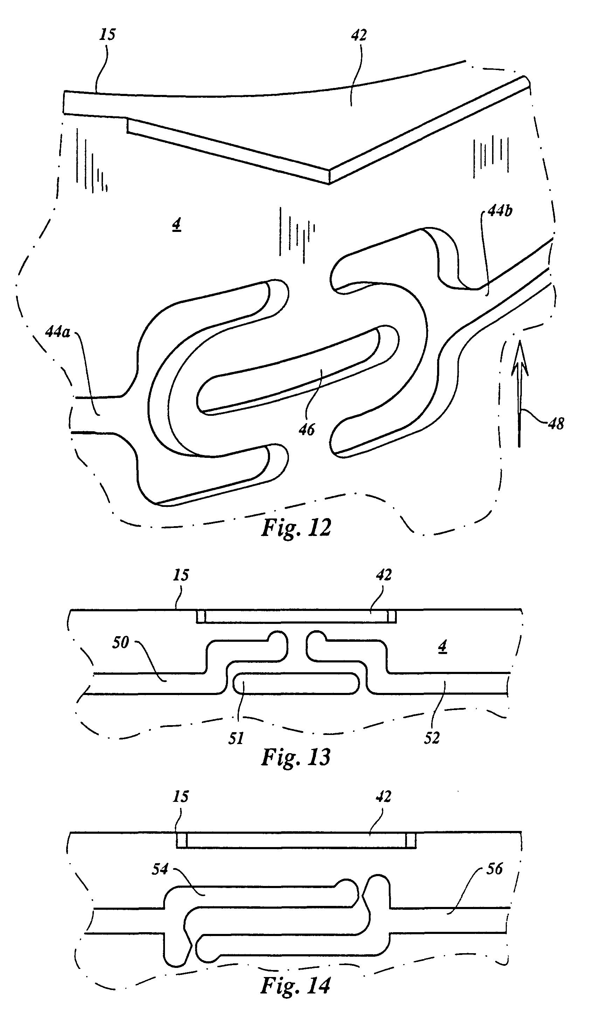

Fig. 12 zeigt zwei sich gabelförmig unter einem Kragenteil 42 verzweigende Schlitze 44a, 44b in der Seitenwand 4 eines Elements. Zwischen den gegabelten Enden der Schlitze 44a, 44b ist ein Schlitz 46 angebracht. Durch die so geformte Schwachstelle in der Nähe des Kragenteils 42 kann sich dieses Kragenteil federnd in Richtung des Pfeils 48 bewegen. Die Schlitze 44a und 44b verlaufen im Abstand von der Randseite 15 des Elements um das gesamte Element herum und verzweigen sich jeweils auf die in Fig. 12 gezeigte Weise in der Nähe jedes der (beispielsweise vier) Kragenteile 42.

Fig. 13 zeigt die Seitenwand 4 eines Elements mit in der Nähe des Kragenteils 42 angebrachten Schlitzen 50, 51 und 52.

Fig. 14 zeigt die Seitenwand 4 eines Elements mit in der Nähe eines Kragenteils 42 angebrachten Schlitzen 54, 55 und 56.

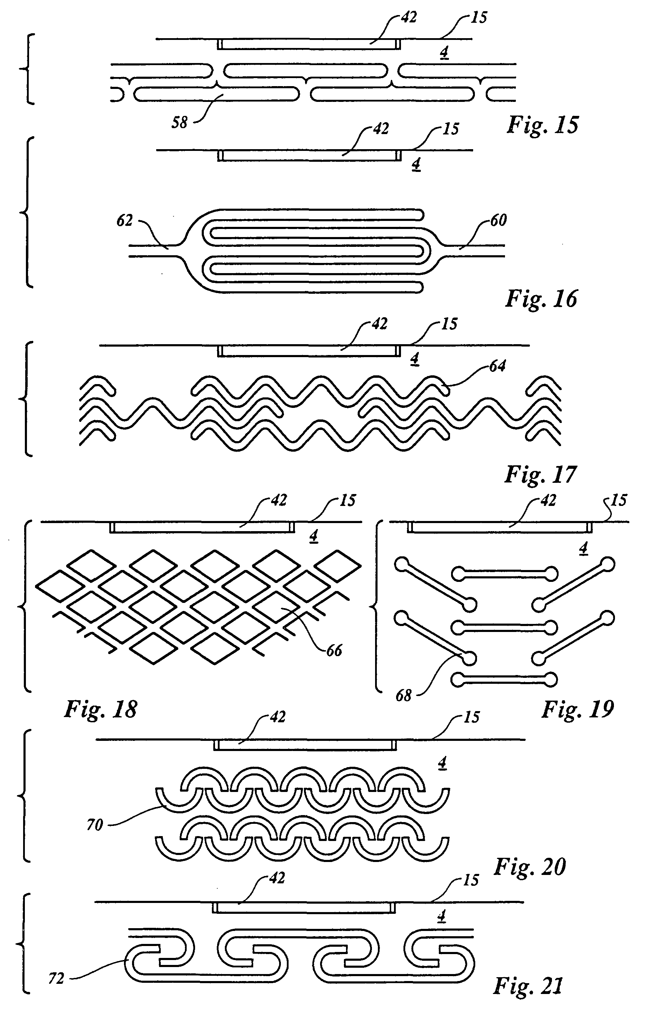

Fig. 15 zeigt die Seitenwand 4 eines Elements mit unter der Randseite 15 in der Nähe des Kragenteils 42 angebrachten sich gegenseitig überlappenden Schlitzen 58, welche teilweise die Form einer geschweiften Klammer aufweisen.

Fig. 16 zeigt die in einer Seitenwand 4 eines Elements in der Nähe des Kragenteils 42 angebrachte Schwachstelle in Form eines zweifach gegabelten Schlitzes 60, der in einen dreifach gegabelten Schlitz 62 eingreift.

Fig. 17 zeigt die Seitenwand 4 eines Elements mit in der Nähe des Kragenteils 42 angebrachten sich gegenseitig teilweise überlappenden wellenförmigen Schlitzen 64.

Fig. 18 zeigt die Seitenwand 4 eines Elements mit einer unter dem Kragenteil 42 angebrachten Schwachstelle in Form eines Musters aus rhombenförmigen Öffnungen 66.

Fig. 19 zeigt eine Gruppe im wesentlichen hantelförmiger Schlitze 68, die sich teilweise gegenseitig überlappen und von denen sich ein Teil parallel zur Randseite 15 des Elements erstreckt, während ein anderer Teil im spitzen Winkel zur Randseite 15 verläuft.

Fig. 20 zeigt ein in der Seitenwand 4 eines Elements in der Nähe des Kragenteils 42 angebrachtes Muster aus im wesentlichen halbkreisförmigen Schlitzen 70.

Fig. 21 zeigt ein Muster aus ineinandergreifenden, im wesentlichen C-förmigen Schlitzen 72 in der Seitenwand 4 eines Elements in der Nähe der Kragenteile 42.

Die Öffnungen der Schlitze 14, 16, 44a, 44b, 46, 50, 51, 52, 54, 56, 58, 60, 62, 64, 66, 68, 70 und 72 können gegebenenfalls mit einem flexiblen oder elastischen Material ausgespritzt werden.

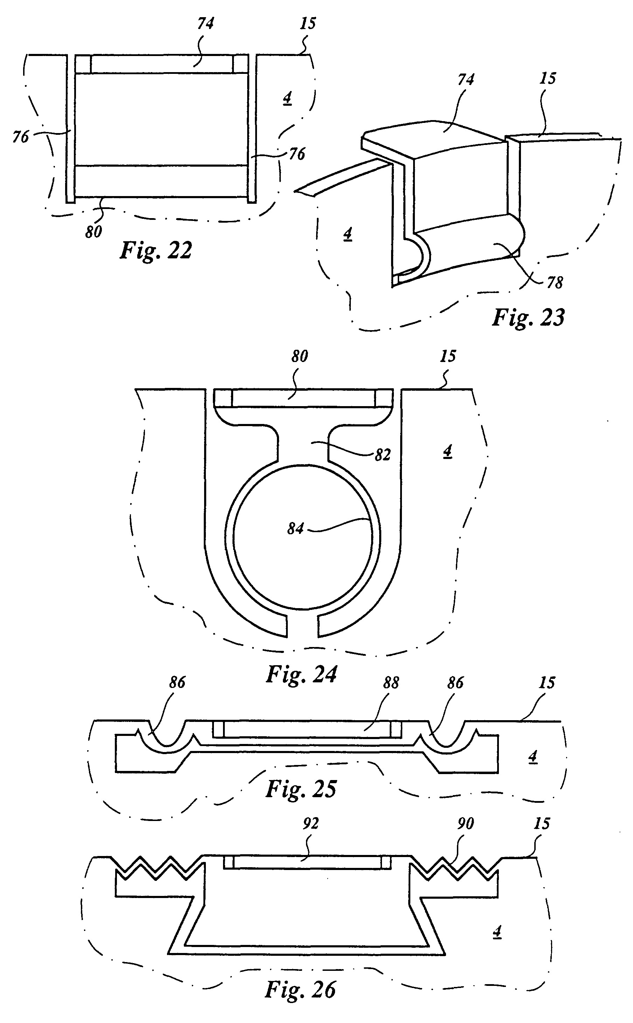

Fig. 22 und 23 zeigen ein Kragenteil 74, das federnd mit der Seitenwand 4 eines Elements verbunden ist. Die beabsichtigte Federwirkung wird durch zwei offene Schlitze 76 und ein halbkreisförmiges Federteil 78 erzielt, das entlang der Linie 80 mit der Seitenwand 4 des Elements verbunden ist.

Fig. 24 zeigt ein Kragenteil 80, das durch ein Fußteil 82 und ein ringförmiges Teil 84 federnd mit der Seitenwand 4 des Elements verbunden ist.

Fig. 25 zeigt ein Kragenteil 88, das über federnde Brücken 86 mit der Seitenwand 4 eines Elements verbunden ist.

Fig. 26 zeigt ein Kragenteil 92, das über federnde Brücken 90 mit der Seitenwand 4 eines Elements verbunden ist.

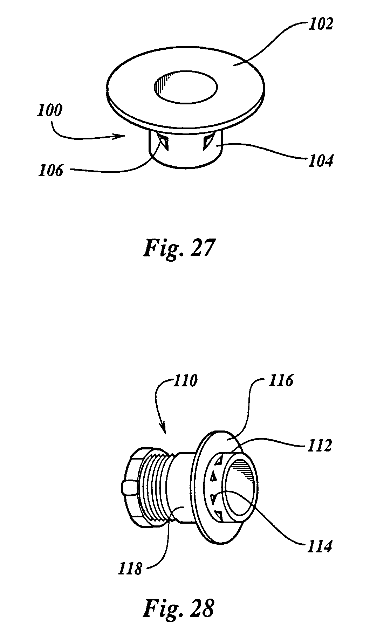

Fig. 27 zeigt einen Durchführungskragen 100, der einen breiten ringförmigen Kragen 102 und ein im wesentlichen röhrenförmiges Teil 104 aufweist. Das röhrenförmige Teil 104 ist mit Nocken 106 versehen und kann zusätzlich noch mit einer nicht näher gezeigten Schwachstelle versehen sein.

Fig. 28 zeigt einen Schraubstutzen 110, der zur Anbringung in einem Loch in einer Wand einer elektrischen Anschlußdose bestimmt ist. Dazu wird ein röhrenförmiges Teil 112, auf dem Nocken 114 angebracht sind, durch das Loch in der Wand der Dose gedrückt, wobei der Kragen 116 an der Wand der Dose anliegt. Ein Schraubstutzenkörper 118 erstreckt sich aus dem Kragen 116. Der Schraubstutzen 110 kann zusätzlich mit einer nicht näher gezeigten Schwachstelle versehen sein.

Innerhalb des Rahmens der Erfindung sind viele Ausführungsformen möglich. Die Nocken und die Federung des Kragens oder der Kragenteile eines Elements, wie beispielsweise einer erfindungsgemäßen Anschlußdose, sind nicht nur untereinander kombinierbar, sondern die erfindungsgemäßen Nocken können auch in einem beliebigen bekannten Element mit oder ohne federndem Kragen aufgenommen werden und der erfindungsgemäße federnde Kragen kann auch in einem beliebigen Element mit herkömmlichen Nocken aufgenommen werden.

## Patentansprüche

1. In einem Loch in einer Wand anzubringendes Element (2; 100; 110), das mindestens eine Seitenwand (4; 104; 112) aufweist und an einer Randseite (15) der Seitenwand von mindestens einem seitlich nach außen vorstehenden Kragenteil (10; 42; 74; 80; 88; 92; 102; 116), das zur Auflage auf einer Wandseite neben dem Loch bestimmt ist, begrenzt wird, wobei die Seitenwand (4; 104; 112) des Elements mit seitlich nach außen vorstehenden Nocken (8; 20a; 20b; 24a; 24b; 24c; 30; 36; 106; 114) versehen ist, die federnd mit dem Element verbunden sind und in eine Position bewegt werden können, in der die Nocken (8; 20a; 20b; 24a; 24b; 24c; 30; 36; 106; 114) nicht aus der Fläche der Seitenwand (4; 104; 112) hervorragen, **dadurch gekennzeichnet, daß** die Nocken (8; 20a; 20b; 24a; 24b; 24c; 30; 36; 106; 114) schwenkbar um eine Scharnierachse (8a; 22a; 22b; 26a; 26b; 26c; 32; 38a, 38b), die im spitzen oder rechten Winkel zur Randseite (15) des Elements (2; 100; 110) steht, mit der Seitenwand (4; 104; 112) des Elements (2; 100; 110) verbunden sind, wobei eine freie Seite jeder Nocke (8; 20a; 20b; 24a; 24b; 24c; 30; 36; 106; 114) an das gegen die Randseite (15) des Elements (2; 100; 110) gerichtete Ende der Scharnierachse (8a; 22a; 22b; 26a; 26b; 26c; 32; 38a, 38b) angrenzt und im wesentlichen parallel zur Randseite (15) des Elements (2; 100; 110) verläuft.

2. Element (2; 100; 110) gemäß Anspruch 1, **dadurch gekennzeichnet, daß** der Winkel zwischen der Scharnierachse (8a; 22a; 22b; 26a; 26b; 26c; 32; 38a, 38b) und der Randseite (15) des Elements (2; 100; 110) mindestens ca. 20° und insbesondere ca. 45° beträgt.

3. Element (2; 100; 110) gemäß Anspruch 1 oder 2, **dadurch gekennzeichnet, daß** die Nocken (8; 20a; 20b; 30; 106; 114) im wesentlichen dreieckig geformt sind, wobei eine Seite jeder Nocke (8; 20a; 20b; 30; 106; 114) im wesentlichen mit dem Scharnierachse (8a; 22a; 22b; 32) zusammenfällt und mit der Seitenwand (4; 104; 112) des Elements (2; 100; 110) verbunden ist, eine zweite Seite im wesentlichen parallel zur Randseite (15) des Elements (2; 100; 110) verläuft und nicht mit der Seitenwand (4; 104; 112) verbunden ist, und die dritte Seite ebenfalls nicht mit der Seitenwand (4; 104; 112) verbunden ist.

4. Element gemäß Anspruch 1 oder 2, **dadurch gekennzeichnet, daß** die Nocken (24a; 24b; 24c) im wesentlichen viereckig geformt sind, wobei eine Seite jeder Nocke im wesentlichen mit dem Scharnierachse (26a; 26b; 26c) zusammenfällt und mit der Seitenwand (4) des Elements verbunden ist, eine zweite Seite im wesentlichen parallel zur Randseite (15) des Elements verläuft und nicht mit der Seitenwand (4) verbunden ist, und die dritten und vierten Seiten ebenfalls nicht mit der Seitenwand (4) verbunden sind.

5. Element (2; 100; 110) gemäß Anspruch 3 oder 4, **dadurch gekennzeichnet, daß** mindestens eine freie Seite jeder Nocke (8; 24a) eine Rippe (8d; 8e; 30a, 30b) aufweist, die sich im wesentlichen entlang der freien Seite und quer zur Seitenwand (4) des Elements (2; 100; 110) erstreckt.

6. Element gemäß Anspruch 1 oder 2, **dadurch gekennzeichnet, daß** die Nocken (30; 36) im wesentlichen kegelsegmentförmig sind, wobei die Spitze des Kegels vom Kragenteil des Elements abgewandt ist.

7. Element gemäß Anspruch 6, **dadurch gekennzeichnet, daß** die Nocken jeweils eine oder mehrere von der Spitze zum Boden verlaufende Falten (40) aufweisen und durch zwei von der Spitze zum Boden des Kegels verlaufende Scharnierlinien (38a, 38b) mit der Seitenwand (4) verbunden sind.

8. Element (2) gemäß einem der Ansprüche 1-7, **dadurch gekennzeichnet, daß** die Seitenwand (4) des Elements in der Nähe des Kragenteils (10; 42; 74; 80; 88; 92) eine derartige Schwachstelle (12) aufweist, daß das Kragenteil (10; 42; 74; 80; 88; 92) in der Fläche der Seitenwand (4) federnd in einer Richtung senkrecht zur Richtung der Randseite (15) des Elements (2) bewegt werden kann.

9. Element (2) gemäß Anspruch 8, **dadurch gekennzeichnet, daß** die Schwachstelle (12) aus einem oder mehreren im Anspritzverfahren angebrachten flexiblen und elastischen Seitenwandteilen besteht.

10. Element (2) gemäß Anspruch 8, **dadurch gekennzeichnet, daß** die Schwachstelle aus einem Muster aus Öffnungen (14, 16; 44a, 44b, 46; 50, 51, 52; 54, 56; 58; 60, 62; 64; 66; 68; 70; 72; 76) in der Seitenwand (4) des Elements besteht.

11. Element gemäß Anspruch 10, **dadurch gekennzeichnet, daß** die Öffnungen (66) vieleckig sind.

12. Element gemäß Anspruch 11, **dadurch gekennzeichnet, daß** die Öffnungen (66) rhombenförmig sind.

13. Element (2) gemäß Anspruch 10, **dadurch gekennzeichnet, daß** die Öffnungen (14, 16; 44a, 44b, 46; 50, 51, 52; 54, 56; 58; 60, 62; 64; 68; 70; 72; 76) schlitzförmig sind.

14. Element (2) gemäß Anspruch 13, **dadurch gekennzeichnet, daß** die schlitzförmigen Öffnungen (14; 44a, 44b, 46; 50, 51, 52; 54, 56; 58; 60; 62) sich im wesentlichen parallel zur Randseite (15) des Elements (2) erstrecken.

15. Element gemäß Anspruch 13 oder 14, **dadurch gekennzeichnet, daß** die Schwachstelle (12) mindestens einen verzweigten gabelförmigen Schlitz (44a, 44b; 54, 56; 60, 62) aufweist, wobei die Zinken um ein Ende eines Schlitzes (44a, 44b; 54, 56; 60, 62) greifen.

16. Element gemäß Anspruch 15, **dadurch gekennzeichnet, daß** die Schwachstelle mindestens zwei verzweigte gabelförmige Schlitze (60, 62) aufweist, wobei die Zinken zueinander gerichtet sind und ineinander greifen.

17. Element gemäß Anspruch 13, **dadurch gekennzeichnet, daß** die schlitzförmigen Öffnungen (70) im wesentlichen halbkreisförmig sind.

18. Element gemäß Anspruch 13, **dadurch gekennzeichnet, daß** die schlitzförmigen Öffnungen (68) hantelförmig sind.

19. Element gemäß einem der Ansprüche 8-18, **dadurch gekennzeichnet, daß** ein Anschlag (13b) zum Begrenzen des Abstands, über den das Kragenteil (10) bewegt werden kann, vorgesehen ist.

20. Element gemäß einem der Ansprüche 1-19, **dadurch gekennzeichnet, daß** das Element (2) eine elektrische Anschlußdose ist.

21. Element gemäß einem der Ansprüche 1-19, **dadurch gekennzeichnet, daß** das Element (110) ein Schraubstutzen ist, der zur Anbringung in der Wand einer elektrischen Anschlußdose bestimmt ist.

22. Element (110) gemäß Anspruch 21, **dadurch gekennzeichnet, daß** ein Schraubstutzenkörper (118) sich aus der Randseite des Elements (110) in der von der Seitenwand (112) abgekehrten Richtung erstreckt.

23. Element gemäß einem der Ansprüche 1-19, **dadurch gekennzeichnet, daß** das Element (110) ein Durchführungskragen ist.

## Claims

1. An element (2; 100; 110) to mount in a hole in a wall, and having at least one side wall (4; 104; 112) and being at one edge (15) of the side wall limited by at least one collar part (10; 42; 74; 80; 88; 92; 102; 116) which protrudes laterally outwards and is intended to rest on a wall face next to the hole, the side wall (4; 104; 112) of the element being provided with projections (8; 20a; 20b; 24a; 24b; 24c; 30; 36; 106; 114) which protrude laterally outwards, are resiliently joined to the element and can be moved into a position in which the projections (8; 20a; 20b; 24a; 24b; 24c; 30; 36; 106; 114) do not protrude from the surface of the side wall (4; 104; 112), **characterised in that** the projections (8; 20a; 20b; 24a; 24b; 24c; 30; 36; 106; 114) are pivotably connected to the side wall (4; 104; 112) of the element (2; 100; 110) about a hinge axis (8a; 22a; 22b; 26a; 26b; 26c; 32; 38a; 38b) positioned at an acute angle or right angle to the edge (15) of the element (2; 100; 110), one free side of each projection (8; 20a; 20b; 24a; 24b; 24c; 30; 36; 106; 114) adjoining the end of the hinge axis (8a; 22a; 22b; 26a; 26b; 26c; 32; 38a; 38b) directed towards the edge (15) of the element (2; 100; 110) and running substantially parallel to the edge (15) of the element (2; 100; 110).

2. Element (2; 100; 110) according to claim 1, **characterised in that** the angle between the hinge axis (8a; 22a; 22b; 26a; 26b; 26c; 32; 38a; 38b) and the edge (15) of the element (2; 100; 110) is approx. 20° at least and particularly approx. 45°.

3. Element (2; 100; 110) according to claim 1 or 2, **characterised in that** the projections (8; 20a; 20b; 30; 106; 114) are substantially triangular in shape, one side of each projection (8; 20a; 20b; 30; 106; 114) substantially coinciding with the hinge axis (8a; 22a; 22b; 32) and being joined to the side wall (4; 104; 112) of the element (2; 100; 110), a second side running substantially parallel to the edge (15) of the element (2; 100; 110) and not being joined to the side wall (4; 104; 112), and the third side likewise not being joined to the side wall (4; 104; 112).

4. Element according to claim 1 or 2, **characterised in that** the projections (24a; 24b; 24c) are substantially quadrangular in shape, one side of each projection substantially coinciding with the hinge axis (26a; 26b; 26c) and being joined to the side wall (4) of the element, a second side running substantially parallel to the edge (15) of the element and not being joined to the side wall (4), and the third and fourth sides likewise not being joined to the side wall (4).

5. Element (2; 100; 110) according to claim 3 or 4, **characterised in that** at least one free side of each projection (8; 24a) has a rib (8d; 8e; 30a; 30b) which extends substantially along the free side and transversely to the side wall (4) of the element (2; 100; 110).

6. Element according to claim 1 or 2, **characterised in that** the projections (30; 36) are substantially in the form of a cone segment, the apex of the cone facing away from the collar part of the element.

7. Element according to claim 6, **characterised in that** each of the projections has one or more folds (40) running from the apex to the base and is joined to the side wall (4) by two hinge lines (38a, 38b) running from the apex to the base of the cone.

8. Element (2) according to any of claims 1-7, **characterised in that**, in the vicinity of the collar part (10; 42; 74; 80; 88; 92), the side wall (4) of the element has a weak point (12) of a kind which allows the collar part (10; 42; 74; 80; 88; 92) to be moved resiliently in the plane of the side wall (4) in a direction perpendicular to the direction of the edge (15) of the element (2).

9. Element (2) according to claim 8, **characterised in that** the weak point (12) comprises one or more flexible and elastic side wall parts applied in a co-injection process.

10. Element (2) according to claim 8, **characterised in that** the weak point comprises a pattern of openings (14, 16; 44a, 44b, 46; 50, 51, 52; 54, 56; 58; 60, 62; 64; 66; 68; 70; 72; 76) in the side wall (4) of the element.

11. Element according to claim 10, **characterised in that** the openings (66) are polygonal.

12. Element according to claim 11, **characterised in that** the openings (66) are rhomboidal.

13. Element (2) according to claim 10, **characterised in that** the openings (14, 16; 44a, 44b, 46; 50, 51, 52; 54, 56; 58; 60, 62; 64; 68; 70; 72; 76) are slot-shaped.

14. Element (2) according to claim 13, **characterised in that** the slot-shaped openings (14; 44a, 44b, 46; 50, 51, 52; 54, 56; 58; 60; 62) extend substantially parallel to the edge (15) of the element (2).

15. Element according to claim 13 or 14, **characterised in that** the weak point (12) has at least one branched furcate slot (44a, 44b; 54, 56; 60, 62), with the prongs embracing one end of a slot (44a, 44b; 54, 56; 60, 62).

16. Element according to claim 15, **characterised in that** the weak point has at least two branched furcate slots (60, 62) with the prongs directed towards one another and interdigitating with one another.

17. Element according to claim 13, **characterised in that** the slot-shaped openings (70) are substantially semicircular.

18. Element according to claim 13, **characterised in that** the slot-shaped openings (68) are dumb-bell-shaped.

19. Element according to any of claims 8-18, **characterised in that** a stop (13b) is provided to limit the distance over which the collar part (10) can be moved.

20. Element according to any of claims 1-19, **characterised in that** the element (2) is an electrical outlet box.

21. Element according to any of claims 1-19, **characterised in that** the element (110) is a threaded socket intended for mounting in the wall of an electrical outlet box.

22. Element (110) according to claim 21, **characterised in that** a threaded socket member (118) extends from the edge of the element (110) in the direction away from the side wall (112).

23. Element according to any of claims 1-19, **characterised in that** the element (110) is a ducting collar.

## Revendications

1. Elément (2; 100; 110) destiné à être monté dans un trou de mur, qui comporte au moins une paroi latérale (4; 104; 112) et qui est délimité au niveau d'un bord (15) de la paroi latérale par au moins un élément de collerette (10; 42; 74; 80; 88; 92; 102; 116) saillant latéralement vers l'extérieur et destiné à s'appuyer sur un côté de mur près du trou, étant précisé que la paroi latérale (4; 104; 112) de l'élément est pourvue de saillies (8; 20a; 20b; 24a; 24b; 24c; 30; 36; 106; 114) qui dépassent latéralement vers l'extérieur, qui sont reliées de manière élastique à l'élément et qui peuvent être déplacées jusqu'à une position dans laquelle elles ne dépassent pas de la surface de la paroi latérale (4; 104; 112), **caractérisé en ce que** les saillies (8; 20a; 20b; 24a; 24b; 24c; 30; 36; 106; 114) sont reliées à la paroi latérale (4; 104; 112) de l'élément (2; 100; 110) en étant aptes à pivoter autour d'un axe de charnière (8a; 22a; 22b; 26a; 26b; 26c; 32; 38a, 38b) qui définit un angle aigu ou un angle droit avec le bord (15) de l'élément (2; 100; 110), un côté libre de chaque saillie (8; 20a; 20b; 24a; 24b; 24c; 30; 36; 106; 114) étant voisin de l'extrémité de l'axe de charnière (8a; 22a; 22b; 26a; 26b; 26c; 32; 38a, 38b) dirigée vers le bord (15) de l'élément (2; 100; 110) et étant sensiblement parallèle à ce bord (15).

2. Elément (2; 100; 110) selon la revendication 1, **caractérisé en ce que** l'angle défini entre l'axe de charnière (8a; 22a; 22b; 26a; 26b; 26c; 32; 38a, 38b) et le bord (15) de l'élément (2; 100; 110) est d'au moins 20°, environ, et en particulier de 45°, environ.

3. Elément (2; 100; 110) selon la revendication 1 ou 2, **caractérisé en ce que** les saillies (8; 20a; 20b; 30; 106; 114) sont sensiblement triangulaires, étant précisé qu'un côté de chaque saillie (8; 20a; 20b; 30; 106; 114) coïncide sensiblement avec l'axe de charnière (8a; 22a; 22b; 32) et est relié à la paroi latérale (4; 104; 112) de l'élément (2; 100; 110), qu'un deuxième côté est sensiblement parallèle au bord (15) de l'élément (2; 100; 110) et n'est pas relié à la paroi latérale (4; 104; 112) et que le troisième côté n'est pas relié, lui non plus, à la paroi latérale (4; 104; 112).

4. Elément selon la revendication 1 ou 2, **caractérisé en ce que** les saillies (24a; 24b; 24c) sont sensiblement quadrangulaires, étant précisé qu'un côté de chaque saillie coïncide sensiblement avec l'axe de charnière (26a; 26b; 26c) et est relié à la paroi latérale (4) de l'élément, qu'un deuxième côté est sensiblement parallèle au bord (15) de l'élément et n'est pas relié à la paroi latérale (4), et que les troisième et quatrième côtés ne sont pas reliés, eux non plus, à la paroi latérale (4).

5. Elément (2; 100; 110) selon la revendication 3 ou 4, **caractérisé en ce qu'**au moins un côté libre de chaque saillie (8; 24a) présente une nervure (8d; 8e; 30a, 30b) qui s'étend sensiblement le long du côté libre et transversalement par rapport à la paroi latérale (4) de l'élément (2; 100; 110).

6. Elément selon la revendication 1 ou 2,
**caractérisé en ce que** les saillies (30; 36) ont sensiblement la forme d'un segment de cône, la pointe du cône étant opposée à l'élément de collerette de l'élément.

7. Elément selon la revendication 6, **caractérisé en ce que** les saillies présentent chacune un ou plusieurs plis (40) qui s'étendent de la pointe à la base, et sont reliées à la paroi latérale (4) par deux lignes de charnière (38a, 38b) qui s'étendent de la pointe à la base du cône.

8. Elément (2) selon l'une des revendications 1 à 7, **caractérisé en ce que** la paroi latérale (4) de l'élément présente, près de l'élément de collerette (10; 42; 74; 80; 88; 92), un affaiblissement (12) tel que l'élément de collerette (10; 42; 74; 80; 88; 92) peut se déplacer par ressort dans la surface de la paroi latérale (4), dans un sens perpendiculaire au sens du bord (15) de l'élément (2).

9. Elément (2) selon la revendication 8, **caractérisé en ce que** l'affaiblissement (12) se compose d'une ou plusieurs parties de paroi latérale flexibles et élastiques réalisées selon le procédé de co-injection.

10. Elément (2) selon la revendication 8, **caractérisé en ce que** l'affaiblissement se compose d'un dessin formé d'ouvertures (14, 16; 44a, 44b, 46; 50, 51, 52; 54, 56; 58; 60, 62; 64; 66; 68; 70; 72; 76) prévues dans la paroi latérale (4) de l'élément.

11. Elément selon la revendication 10, **caractérisé en ce que** les ouvertures (66) sont polygonales.

12. Elément selon la revendication 11, **caractérisé en ce que** les ouvertures (66) ont la forme de losanges.

13. Elément (2) selon la revendication 10, **caractérisé en ce que** les ouvertures (14, 16; 44a, 44b, 46; 50, 51, 52; 54, 56; 58; 60, 62; 64; 68; 70; 72; 76) ont la forme de fentes.

14. Elément (2) selon la revendication 13, **caractérisé en ce que** les ouvertures en forme de fentes (14; 44a, 44b, 46; 50, 51, 52; 54, 56; 58; 60; 62) sont sensiblement parallèles au bord (15) de l'élément (2).

15. Elément selon la revendication 13 ou 14, **caractérisé en ce que** l'affaiblissement (12) comporte au moins une fente qui se ramifie en forme de fourche (44a, 44b; 54, 56; 60, 62), les dents de la fourche entourant une extrémité d'une fente (44a, 44b; 54, 56; 60, 62).

16. Elément selon la revendication 15, **caractérisé en ce que** l'affaiblissement comporte au moins deux fentes qui se ramifient en forme de fourche (60, 62), les dents de la fourche étant dirigées les unes vers les autres et s'emboîtant.

17. Elément selon la revendication 13, **caractérisé en ce que** les ouvertures en forme de fentes (70) sont sensiblement semi-circulaires.

18. Elément selon la revendication 13, **caractérisé en ce que** les ouvertures en forme de fentes (68) ont la forme d'haltères.

19. Elément selon l'une des revendications 8 à 18, **caractérisé en ce qu'**il est prévu une butée (13b) pour limiter la distance sur laquelle l'élément de collerette (10) peut être déplacé.

20. Elément selon l'une des revendications 1 à 19, **caractérisé en ce que** l'élément (2) est une prise de courant.

21. Elément selon l'une des revendications 1 à 19, **caractérisé en ce que** l'élément (110) est un raccord fileté qui est destiné à être monté dans la paroi d'une prise de courant.

22. Elément (110) selon la revendication 21, **caractérisé en ce qu'**un corps de raccord fileté (118) s'étend à partir du bord de l'élément (110) à l'opposé de la paroi latérale (112).

23. Elément selon l'une des revendications 1 à 19, **caractérisé en ce que** l'élément (110) est une collerette de traversée.
